# EUROPEAN PATENT APPLICATION

(11) **EP 2 233 721 A1**
(43) Date of publication of application: **29.09.2010**
(21) Application number: 10153070.7
(22) Date of filing: 09.02.2010
(51) Int. Cl.: F02C 3/067, F02C 3/107, F02C 3/113, F02C 7/275, F02C 7/36

(54) **Gas turbine engine**

(30) Priority: 09.03.2009 GB 0903935
(71) Applicant: Rolls-Royce plc, 65 Buckingham Gate London SW1E 6AT (GB)
(72) Inventor: Edwards, David, Derby, Derbyshire DE22 1BP (GB)
(74) Representative: White, Kevin Andrew

(57) **Abstract**

A gas turbine engine (30) comprising an intermediate compressor (14) and two shafts (24, 26) connecting respective high and low pressure turbines (17, 19) and compressors (13, 15) respectively is characterised by the intermediate pressure compressor (14) connecting to either the high pressure shaft (24) or the low pressure shaft (26) via a gearbox (32, 33).

## Description

The present invention relates to a gas turbine engine arrangement.

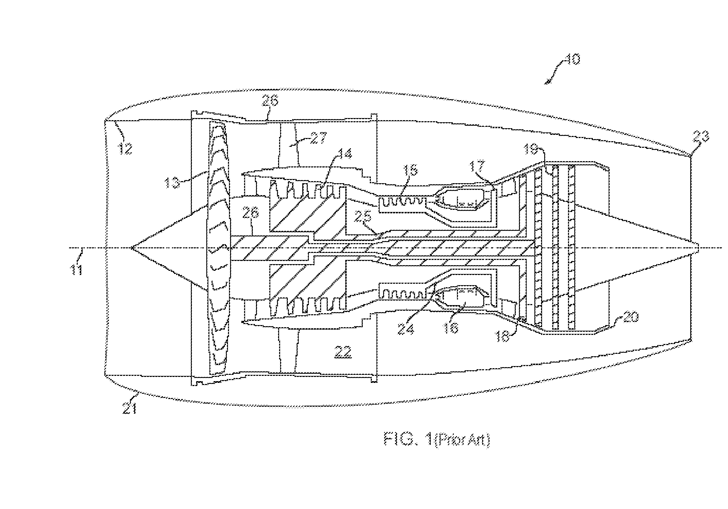

Conventional three-shaft gas turbine engines comprise high, intermediate and low pressure spools each having respective turbines and compressors. Figure 1 shows such an arrangement and it is discussed in more detail in the description.

Conventional two-shaft gas turbine engines comprise high and low pressure turbine connected to a high pressure compressor and a propulsive fan. A booster compressor, situated between the fan and high pressure compressor, is often provided and which is attached to the low pressure spool. Furthermore, as described in EP1939430A2, a contra-rotating booster compressor is provided. This booster compressor comprises first rotor stages that are connected to and rotate with the propulsive (low pressure) fan and second rotor stages that are driven in an opposite direction to the first rotor stages via a gearbox. The gearbox is driven via the low pressure shaft. Furthermore, the gearbox is configured to rotate the second rotor at a speed less than the first rotor and low pressure compressor.

Two shaft engines are disadvantaged because their high pressure compressors require many stages and a high pressure gain across each rotor stage to achieve a suitable overall pressure ratio. Even with a booster compressor this pressure ratio is difficult to attain. The booster compressor is compromised by the relatively slow rotational speed of the low pressure shaft. Two shaft engines are also disadvantaged relative to three shaft engines because they require more compressor stages meaning a longer and heavier engine for the same power output.

A three-shaft engine provides a theoretically better solution to achieving desired overall pressure gain as it comprises three rotating shafts whose rotational speeds can each be independently set. However, a drawback to the three-shaft engine is the mechanical complexity of having three shafts. In particular, there are three shafts passing radially inwardly of the combustion chamber, and two shafts passing under the high-pressure turbine disc.

Therefore it is an object of the present invention to provide a new gas turbine arrangement which obviates the complexity of a three shaft engine and the difficulties of achieving a desired overall pressure gain of a two-shaft engine.

In accordance with the present invention there is provided a gas turbine engine comprising an intermediate compressor and two shafts connecting respective high and low pressure turbines and compressors respectively is characterised by the intermediate pressure compressor connecting to either the high pressure shaft or the low pressure shaft via a gearbox.

Preferably, the intermediate compressor is rotated at a speed between that of the high and low compressors.

Preferably, the engine configured with the intermediate pressure compressor connecting to the high pressure shaft and the gearbox is a reduction gearbox.

Alternatively, the engine configured with the intermediate pressure compressor connecting to the low pressure shaft the gearbox is an overdrive gearbox.

Possibly, the high pressure turbine comprises two or more rotor stages.

The present invention will be more fully described by way of example with reference to the accompanying drawings in which:
Figure 1 is a schematic section of a prior art three-shaft ducted fan gas turbine engine;
Figure 2 is a schematic section of a first gas turbine engine in accordance with the present invention;
Figure 3 is a schematic section of a second gas turbine engine in accordance with the present invention.

With reference to Figure 1, a ducted fan gas turbine engine generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and a core engine exhaust nozzle 20. A nacelle 21 generally surrounds the engine 10 and defines the intake 12, a bypass duct 22 and a bypass exhaust nozzle 23. The fan 13 is circumferentially surrounded by a fan casing 26, which is supported by an annular array of outlet guide vanes 27.

The gas turbine engine 10 works in a conventional manner so that air entering the intake 11 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place. The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by interconnecting shafts 24, 25, 26 respectively thereby making up high, intermediate and low-pressure spools.

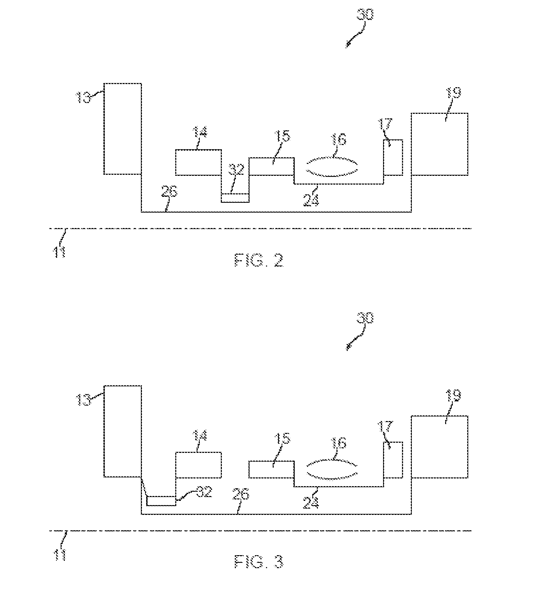

Referring to Figure 2, where like components have the same reference numerals as in Figure 1, a new gas turbine engine 30 comprises two turbines 17, 19 and three compressors 13, 14, 15. A low pressure turbine 19 drives the fan 13 via shaft 26 similarly as seen in Figure 1. The high pressure turbine 17 drives the high pressure compressor 15 via shaft 24. However, in this arrangement there is no intermediate turbine (18 in Figure 1) and no respective shaft (25 in Figure 1). Instead the intermediate compressor 14 is connected to the high pressure shaft 24 via a gearbox 32. In this first embodiment of the present invention, the gearbox 32 is arranged to drive the intermediate compressor 14 at a lower rotational speed than the high pressure compressor 15 / high pressure shaft 24. Accordingly, the high pressure turbine 17 is required to drive both the intermediate pressure compressor 14 and the high pressure compressor 15 and is therefore an increased capacity to a conventional three-shaft high pressure turbine. In particular, a two stage rotor turbine is provided.

In a second embodiment of the present invention, referring to Figure 3, the low pressure turbine 19 drives the fan 13 via low pressure shaft 26 again similarly to the engine shown in Figure 1. However, the low pressure shaft 26 is connected via an overdrive gearbox 33 to the intermediate compressor 14. The high pressure turbine 17 drives only the high pressure compressor 15 via shaft 24. In this arrangement there is no intermediate turbine (18 in Figure 1) and no respective shaft (25). In this second embodiment, the overdrive gearbox 33 is arranged to drive the intermediate compressor 14 at a higher rotational speed than the low pressure compressor 13/low pressure shaft 26. Accordingly, the high pressure turbine 17 is required to drive both the intermediate pressure compressor 14 and the low pressure compressor 13 and is therefore an increased capacity to a conventional three-shaft low pressure turbine. In particular, additional rotor stages in the low pressure turbine may be provided.

In either of these arrangements of this gas turbine engine 30 the three compressors 13, 14, 15 can rotate at optimum design speeds similar to a prior art three-shaft engine yet there are only two main shafts 24, 26, hence mechanical complexity is greatly reduced.

For each application of the present invention, each compressor 14, 15 may comprise any desirable number of rotor and stator stages. Nonetheless, the total number of turbine stages will be reduced from that of an equivalent power, three-shaft engine.

The gearboxes 32, 33 are preferably configured as an epicyclic gearbox as is well known in the art. However, a simple spur gearbox or other suitable device could be used.

## Claims

1. A gas turbine engine (30) comprising an intermediate compressor (14) and two shafts (24, 26) connecting respective high and low pressure turbines (17, 19) and compressors (13, 15) respectively is **characterised by** the intermediate pressure compressor (14) connecting to either the high pressure shaft (24) or the low pressure shaft (26) via a gearbox (32, 33).

2. The gas turbine engine (30) as claimed in claim 1 wherein the intermediate compressor is rotated at a speed between that of the high and low compressors.

3. The gas turbine engine (30) as claimed in any one of claims 1-2 wherein the engine configured with the intermediate pressure compressor (14) connecting to the high pressure shaft (24) and the gearbox (32) is a reduction gearbox.

4. The gas turbine engine (30) as claimed in any one of claims 1-2 wherein the engine configured with the intermediate pressure compressor (14) connecting to the low pressure shaft (26) the gearbox (33) is an overdrive gearbox.

5. The gas turbine engine (30) as claimed in any one of claims 1-4 wherein the high pressure turbine (17) comprises two or more rotor stages.

## Amended claims

### Amended claims in accordance with Rule 137(2) EPC.

**1.** A gas turbine engine (30) comprising an intermediate compressor (14) and two shafts (24, 26) connecting respective high and low pressure turbines (17, 19) and compressors (13, 15) respectively is **characterised by** the intermediate pressure compressor (14) connecting only to the high pressure shaft (24) via a gearbox (32, 33).

**2.** The gas turbine engine (30) as claimed in claim 1 wherein the intermediate compressor is rotated at a speed between that of the high and low compressors.

**3.** The gas turbine engine (30) as claimed in any one of claims 1-2 wherein the engine configured with the intermediate pressure compressor (14) connecting to the high pressure shaft (24) and the gearbox (32) is a reduction gearbox.

**4.** The gas turbine engine (30) as claimed in any one of claims 1-3 wherein the high pressure turbine (17) comprises two or more rotor stages.
